# EUROPÄISCHE PATENTANMELDUNG

(11) **EP 2 314 951 A1**
(43) Veröffentlichungstag der Anmeldung: **27.04.2011**
(21) Anmeldenummer: 10189714.8
(22) Anmeldetag: 18.03.2008
(51) Int. Cl.: F24J 2/22

(54) **Absorber für Solarthermie und Verfahren zur Herstellung eines Absorbers**

(30) Priorität: 20.03.2007 DE 102007013919
(62) Teilanmeldung aus: 08717946.1
(71) Anmelder: ETA 86 Solar Steel AG, 6340 Baar (CH)
(72) Erfinder: Fischer, Werner, 46535, Dinslaken (DE)
(74) Vertreter: Gröschel, Andreas

(57) **Zusammenfassung**

Ein Absorber (10), mit dem durch Solarthermie Wärme gewonnen werden kann, weist ein der Sonne zugesandtes Oberblech (12) und ein der Sonne abgewandtes Unterblech (14) auf, zwischen denen Leitmittel (18, 54) zur im Wesentlichen linearen und/oder homogenen Durchleitung eines Fluids von einem Einlass (20) zu einem Auslass (24) angeordnet sind. Der Einlass (20) und/oder der Auslass (24) und/oder die Leitmittel (18, 54) sind durch das Oberblech (12) und/oder das Unterblech (14) ausgebildet, wobei der Einlass (20) und/oder der Auslass (24) und/oder die Leitmittel (18, 54) durch Tiefziehen herstellbar sind, so dass sich eine besonders einfache und kostengünstige Herstellung des Absorbers (10) ergibt.

## Beschreibung

Die Erfindung betrifft einen Absorber, mit dem durch Solarthermie Wärme gewonnen werden kann, beispielsweise um ein Gebäude zu heizen oder zu kühlen. Die Erfindung betrifft ferner ein Verfahren zur Herstellung eines derartigen Absorbers.

Bei einem bekannten Absorber, der zur Wärmegewinnung aus Solarthermie verwendet wird, ist ein Kupferblech vorgesehen, auf das Kupferrohre aufgelötet oder geschweißt sind. Die aufgelöteten Kupferrohre sind an der einen Seite mit einem Zuleitungsrohr und auf der anderen Seite mit einem Abteilungsrohr verbunden. Über das Zuleitungsrohr wird Wasser durch die Kupferrohre geleitet, das über die Wärmestrahlung der Sonne in den Kupferrohren aufgeheizt wird und über das Abteilungsrohr beispielsweise zum Heizen weiterverwendet werden kann.

Nachteilig bei einem derartigen Absorber ist der hohe Herstellungsaufwand. Das Verlöten der Kupferrohre mit dem Kupferblech ist zeitaufwendig und nicht immer mit einer konstanten Qualität möglich. Ferner ist es erforderlich, bei dem Zuleitungsrohr und dem Ableitungsrohr durch Bearbeiten, beispielsweise Bohren, Fräsen und/oder Schweißen Anschlüsse zu realisieren, um die einzelnen Kupferrohre mit dem Zuleitungsrohr bzw. dem Ableitungsrohr zu verbinden. Zur Herstellung des Absorbers sind somit mehrere unterschiedliche Arbeitsschritte erforderlich, die mit Hilfe unterschiedlicher Maschinen und unterschiedlicher Prozesse durchgeführt werden müssen. Dies ist zeitaufwendig und personalintensiv, wodurch sich hohe Herstellungskosten ergeben.

Es ist die Aufgabe der Erfindung einen Absorber zu schaffen, der einfacher herzustellen ist, sowie ein Verfahren zur einfacherer Herstellung eines derartigen Absorbers.

Die Aufgabe wird erfindungsgemäß durch einen Absorber mit den Merkmalen des Anspruchs 1 und ein Verfahren mit den Merkmalen des Anspruchs 10 gelöst. Vorteilhafte Ausgestaltungen der Erfindung sind in den Unteransprüchen angegeben.

Der erfindungsgemäße Absorber zur Wärme- und/oder Energiegewinnung aus Solarthermie weist ein Oberblech auf, das im Betriebszustand des Absorbers der Sonne zugewandt ist, sowie ein Unterblech, das im Betriebszustand des Wärmestauschers von der Sonne abgewandt ist. Zwischen dem Oberblech und dem Unterblech sind Leitmittel, beispielsweise Kanäle oder Strömungsleitbleche, ausgebildet, durch die ein Fluid von einem Einlass zu einem Auslass im Wesentlichen linear und/oder homogen hindurch geleitet werden kann. Der Einlass und/oder der Auslass sind durch das Oberblech und/oder durch das Unterblech ausgebildet. Der Einlass und/oder der Auslass und/oder die Leitmittel sind durch Tiefziehen herstellbar.

Es ist somit möglich den Absorber mit Hilfe von sehr wenigen Bauteilen herzustellen. Die einzelnen Bauteile Oberblech, Unterblech und ein gegebenenfalls vorgesehenes Zwischenblech zur Ausbildung der Leitmittel können durch vergleichbare Verfahren hergestellt werden, so dass besonders einfach Großserien der einzelnen Bauteile im industriellen Maßstab einfach und kostengünstig hergestellt werden können. Beispielsweise ist es möglich, das Oberblech, das Unterblech sowie das Zwischenblech aus einem Metallband, insbesondere ein und demselben Metallband herzustellen, indem die einzelnen Bleche durch Umformtechniken wie beispielsweise Tiefziehen, Kaltumformen, Warmumformen und dergleichen in ihre benötigte Form gebracht werden. Durch die beispielsweise beim Tiefziehen entstehenden Gefügeveränderungen in dem Blech wird die Festigkeit und Stabilität sogar bei abnehmender Blechstärke erhöht, so dass durch geringen Materialeinsatz ein langlebiges und haltbares Produkt entsteht. Je nach Anwendungsfall können auch anwendungsorientiert verschiedene Metallbänder verwendet werden. Dadurch ist es möglich nutzungsorientiert verschiedene Werkstoffe, Blechdicken, Beschichtungen und Formen miteinander zu kombinieren, indem entsprechende unterschiedliche Metallbänder verwendet werden. Diese Fertigung kann insbesondere kontinuierlich und im industriellen Maßstab erfolgen. Ferner sind verhältnismäßig wenige Maschinen erforderlich, um den erfindungsgemäßen Absorber herzustellen. Die Herstellung des Absorbers kommt mit vergleichsweise preiswerten Werkstoffen und Zusatzstoffen aus. Die Herstellung ist somit vereinfacht und nicht zuletzt aufgrund der geringeren Personalkosten, der besonders hohen Taktzeiten bei der Produktion und der preiswerten eingesetzten Materialien kostengünstiger. Durch eine geeignete Auswahl an Materialien und deren Verbindung kann die Leistungsfähigkeit des Absorbers bezogen auf die Energieaufnahme und Energieabgabe optimiert werden. Insbesondere weist der Absorber nur genau einen Einlass und nur genau einen Auslass auf.

Vorzugsweise sind der Einlass und/oder der Auslass einfache Ausstülpungen, so dass sich eine einfache Geometrie ergibt, die durch Tiefziehen leicht herstellbar ist. Die Ausstülpungen können zylindrisch oder leicht konisch mit einer Steigung von ca. 1,5% bis 3,0% ausgestaltet sein und gegebenenfalls eine Hinterschneidung aufweisen, so dass es besonders einfach ist mit Hilfe einer Muffe einen Schlauch anzuschließen. Die Ausstülpungen sind insbesondere besonders kurz ausgestaltet und weisen beispielsweise eine Länge auf, die gerade ausreichend ist eine Muffe anzuschließen, so dass auch bei besonders geringen Blechdicken die Ausstülpungen durch Tiefziehen hergestellt werden können und ein Anschweißen des Einlasses und des Auslasses an das Oberblech und/oder Unterblech vermieden werden kann.

Ferner ist es möglich durch computerunterstützte Berechnungen beispielsweise durch FEM für den Absorber die ideale Strömung und Energieaufnahme z. B. auf Basis der Werkstoffe, Form und/oder Beschichtung zu berechnen. Entsprechend kann die ideale Energieableitung z. B. auf Basis für den jeweiligen Anwendungsfall optimierter Strömungsverhältnisse im Absorber bereits im Vorfeld vollständig bestimmt werden, wodurch der Aufbau und die Geometrie des Absorbers bereits in der Planungs- und Konstruktionsphase ideal optimiert werden kann, um eine optimale Energieabsorption sowie Energieableitung durch optimale Strömungen im Absorber zu erreichen. Technische Randbedingungen können bereits sehr früh berücksichtigt und derart umgesetzt werden, dass sich für jeden individuellen Einzelfall eine maßgeschneiderte optimierte Lösung ergibt.

Aufgrund des verhältnismäßig einfachen Aufbaus des Absorbers und bei Verwendung entsprechend korrosionsbeständiger Bauteile ist der Absorber über seine Lebensdauer nahezu revisionsfrei, da Reparaturen von Verschleißteilen nicht erforderlich sind. Der Absorber ist somit besonders dafür geeignet Privatgebäude zu heizen und/oder zu kühlen, da insbesondere Wartungstätigkeiten, sofern überhaupt erforderlich, im Bedarfsfall einfach von einem externen Anbieter eingeholt werden können und eigene Spezialkenntnisse für den Betrieb nicht erforderlich sind.

Insbesondere ist es möglich, Kupfer oder Kupferlegierungen als Material zur Herstellung des Absorbers zu vermeiden. Der Absorber kann vorzugsweise aus einem Stahl oder einem nicht Eisenmetall, ausgenommen Kupfer oder Kupferlegierungen, hergestellt sein. Es ist somit möglich, ein besonders kostengünstiges Material auszuwählen oder ein Material zu verwenden, das sich besonders einfach durch die vorgesehen Umformverfahren in den gewünschten Zustand bringen lässt.

Die Leitmittel können beispielsweise durch ein geformtes Zwischenblech ausgebildet werden, das insbesondere durch Umformen geformt wurde. Das geformte Zwischenblech ist beispielsweise als Wellblech oder Trapezblech ausgebildet. Die Leitmittel können aber auch dadurch ausgebildet sein, dass das Oberblech und/oder das Unterblech insbesondere durch Umformen derart geformt sind, dass sich zwischen dem Oberblech und dem Unterblech die Leitmittel beispielsweise als Kanäle ausbilden. Die Leitmittel können hierzu insbesondere durch Tiefziehen des Oberblechs und/oder des Unterblechs ausgebildet sein.

Vorzugsweise sind die Leitmittel einstückig mit dem Unterblech ausgebildet und das Oberblech liegt an den Leitmittel an. Zusätzlich oder alternativ sind die Leitmittel einstückig mit dem Oberblech ausgebildet und das Unterblech liegt an den Leitmitteln an. Vorzugsweise sind sämtliche Leitmittel entweder nur durch das Oberblech oder nur durch das Unterblech ausgebildet, um den Herstellungsaufwand gering zu halten. Insbesondere kann das Blech mit den ausgeformten Leitmitteln derart gestaltet sein, dass sich sämtliche Kontaktflächen in einer gemeinsamen Ebene befinden, so dass das andere Blech als gerade Platte ausgestaltet sein kann, die nicht umgeformt werden muss. Dadurch, dass das jeweils andere Blech an den ausgeformten Leitmitteln anliegt, können äußere Kräfte, beispielsweise das Eigengewicht des Oberblechs, und innere Kräfte, beispielsweise der Druck des Fluids im Absorber, besser aufgenommen und abgeleitet werden. Dies ermöglicht einen Absorber mit einer großen Oberfläche, ohne dass Probleme bezüglich der Statik auftreten.

Besonders bevorzugt sind mehrere Leitmittel vorgesehen, die in Strömungsrichtung und/oder quer zur Strömungsrichtung zueinander beabstandet angeordnet sind. Hierbei wird die Erkenntnis ausgenutzt, dass das Fluid eine so geringe Strömungsgeschwindigkeit aufweist, dass mehrere vereinzelt angeordnete Leitmittel ausreichen, um eine lineare Strömung von der Einlassseite zur Auslassseite zu gewährleisten, die insbesondere laminar ist. Insbesondere sind die Leitmittel in Strömungsrichtung strömungstechnisch konturiert, indem die Leitmittel beispielsweise einen keilförmigen oder tropfenförmigen Querschnitt aufweisen. Vorzugsweise weisen die Leitelemente eine Länge in Strömungsrichtung auf, die größer ist als eine Breite quer zur Strömungsrichtung. Die Leitmittel können dadurch eine im Wesentlichen linear strömende Fluidströmung gewährleisten und gleichzeitig einen besonders geringen Strömungswiderstand bieten.

In einer bevorzugten Ausführungsform weist das Unterblech ein dem Einlass zugeordnetes Einlaufbassin zur Ausbildung eines Einströmbereichs aus. Ferner weist das Unterblech ein dem Auslass zugeordnetes Auslaufbassin zur Ausbildung eines Ausströmbereichs auf. Das Einlaufbassin und das Auslaufbassin sind über einen Leitungsboden, der gegebenenfalls die aus der Ebene des Unterblechs hervorragenden Leitmittel ausbildet, verbunden. Der Leitungsboden weist hierbei einen geringeren Abstand zum Oberblech aufweist als ein Einlaufbassinboden des Einlaufbassins und ein Auslaufbassinboden des Auslaufbassins. In dem Einströmbereich kann sich die Strömung des Fluids, das über den Einlass in das Einlaufbassin geleitet wurde, aufgrund der deutlich abfallenden Strömungsgeschwindigkeit zunächst etwas vergleichsmäßigen, wodurch turbulente oder ungleichförmige Strömungen im Bereich des Leitungsbodens vermieden sind oder zumindest der Turbulenzgrad reduziert ist. Entsprechend werden im Ausströmbereich die an den Leitelementen vorbeiströmenden Strömungen zunächst zusammengeführt bevor das Fluid über den Auslass den Absorber verlässt. Dadurch werden auch im Ausströmbereich und im Bereich des Leitungsbodens turbulente Strömungen vermieden oder zumindest reduziert.

Insbesondere ist es möglich die Vergleichmäßigung der Strömung nur durch die Bassins zu gewährleisten, so dass eine lineare, insbesondere laminare, und homogene Strömung im Bereich des Leitungsbodens ohne weitere Hilfsmittel erreicht werden kann. In diesem Fall kann die strömungstechnische Wirkung der im Bereich des Leitungsbodens ausgebildeten Leitmittel im Wesentlichen unterstützend sein, so dass den Leitmitteln eher eine stabilisierende Wirkung für den konstruktiven Aufbau des Absorbers zukommt. Bei ausreichender Stabilität des Absorbers im Übrigen können die im Bereich des Leitungsbodens angeordneten Leitmittel sogar weggelassen werden. Die durch die Bassins erreichte lineare und/oder homogene Strömung kann in diesem Fall im Bereich des Leitungsbodens zwischen geraden Flächen des Unterblechs und des Oberblechs bereit gestellt werden, um Wärme aufzunehmen und/oder abzugeben. Die Leitmittel zur im Wesentlichen linearen und/oder homogenen Durchleitung des Fluids von dem Einlass zu dem Auslass werden in diesem Fall ausschließlich durch das Einlaufbassin und/oder das Auslaufbassin ausgebildet.

Das Einlaufbassin im Einströmbereich und das Auslaufbassin im Ausströmbereich sind insbesondere in Abhängigkeit vom zu erwartenden Volumenstrom des Fluids dimensioniert. Da sich somit innerhalb des Absorbers eine weitgehend gleichmäßige, insbesondere laminare und homogene Strömung ergibt, wird ein Wärmetransport in der Strömungsrichtung optimiert bzw. entgegen der Strömungsrichtung zumindest reduziert, so dass mit dem erfindungsgemäßen Absorber eine besonders hohe Temperaturdifferenz des Fluids zwischen dem Einlass und dem Auslass erreicht werden kann, wodurch der Wirkungsrad des Absorbers verbessert ist. Insbesondere ergibt sich eine homogene Temperaturverteilung in Strömungsrichtung, die insbesondere laminar ist. Ferner kann insbesondere bei der Herstellung durch Tiefziehen der Strömungsquerschnitt im Einströmbereich größer als der Strömungsquerschnitt im Ausströmbereich vorgesehen werden, so dass sich vom Einlass zum Auslass eine Änderung der Strömungsgeschwindigkeit realisieren lässt, beispielsweise um für einen besonders hohen Wirkungsgrad die Energieaufnahme bzw. Energieabfuhr zu optimieren. Es ist somit möglich, dass im Einströmbereich und/oder im Ausströmbereich der Strömungsquerschnitt, der durch den Abstand des Oberblechs zum Unterblech bestimmt wird, größer ausgestaltet ist als im Bereich des Leitungsbodens. Der Einströmbereich und/oder der Ausströmbereich können dadurch eine Speicherfunktion wahrnehmen und einen Teil des Fluids zeitweise im Einströmbereich und/oder im Ausströmbereich speichern.

Der Abstand des Leitungsbodens zum Oberblech beträgt insbesondere ≥1,5 mm bis ≤6,0 mm, vorzugsweise ≥ 2,0 mm bis < 4,0 mm und besonders bevorzugt > 2,5 mm bis ≤ 3,5 mm. Die durchschnittliche Strömungsgeschwindigkeit des Fluids, insbesondere Wasser, beträgt im Bereich des Leitungsbodens insbesondere ≥ 0,001 m/s bis ≤0,02 m/s, vorzugsweise ≥ 0,002 m/s bis ≤0,005 m/s und besonders bevorzugt ≥0,0025 m/s bis ≤ 0,0035 m/s. Dadurch kann eine hohe Wärmeaufnahme erreicht werden, während gleichzeitig ein besonders geringer Druckverlust erreicht wird.

In einer bevorzugten Ausführungsform sind das Oberblech und das Unterblech beispielsweise durch Kleben oder Laserschweißen miteinander verbunden. Vorzugsweise weisen das Oberblech und das Unterblech hierzu jeweils einen zumindest teilweise umlaufenden Ansatz bzw. Flansch auf, so dass das Oberblech und das Unterblech über den Ansatz/Flansch miteinander verbunden werden können. Das gegebenenfalls vorhandene Zwischenblech kann ebenfalls mit dem Oberblech und/oder dem Unterblech beispielsweise durch Kleben oder Laserschweißen verbunden sein. Wenn für das Oberblech und das Unterblech ein insbesondere ferritischer Stahl verwendet wird, können die Hystereseverluste des Stahls genutzt werden, indem der Stahl durch Induktion erwärmt wird, um den verwendeten Kleber schnell aushärten zu lassen, wodurch die Produktionsgeschwindigkeit steigt und ein Auslagern des Absorbers zum Aushärten des Klebers, sofern überhaupt, zumindest reduziert werden kann. Es ist jedoch auch möglich, das Zwischenblech durch die Verbindung des Oberblechs mit dem Unterblech zwischen dem Oberblech und dem Unterblech bewegungsfest festzuklemmen, so dass eine gesonderte Verbindung des Zwischenblechs mit dem Oberblech und/oder dem Unterblech nicht erforderlich ist. Zusätzlich oder alternativ können die einzelnen Verbindungen zwischen Oberblech, Unterblech und/oder Zwischenblech formschlüssig, beispielsweise durch Klipsen erfolgen. Hierzu kann beispielsweise eine hinterschnittene Rippe in eine sich im Öffnungsbereich verjüngende Vertiefung insbesondere bewegungsfest eingesetzt werden, wobei die Rippe und/oder die Vertiefung durch Umformen, insbesondere Tiefziehen hergestellt sein können.

Vorzugsweise ist der Absorber in Betrieb im Bereich des umlaufenden Ansatzes/Flansches mit einem Träger befestigt. Besonders bevorzugt weist der Absorber eine Befestigungsvorrichtung auf, in der eine Haltenut vorgesehen ist. In die Haltenut kann der umlaufendene Ansatz eingesetzt sein, so dass der Absorber sicher in der Befestigungsvorrichtung gehalten ist. Eine zumindest teilweise Zerstörung der Oberfläche der für den Absorber verwendeten Bleche, beispielsweise um durch Lochen Durchgangsbohrungen für Befestigungsschrauben vorzusehen, wird dadurch vermieden. Die Befestigungsvorrichtung kann insbesondere den Absorber vorzugsweise im Bereich des umlaufenden Ansatzes rahmenförmig umgreifen und gegenüber dem Gebäude isolieren. Besonders bevorzugt weist die Befestigungsvorrichtung eine Oberseite auf, die mit dem Oberblech fluchtet. Dadurch, dass die Oberseite der Befestigungsvorrichtung mit dem Oberblech fluchtet, ergibt sich ein im Wesentlichen absatzloser Gesamteindruck für den Absorber. Dieses im Wesentlichen ebene Design ermöglicht es, den Absorber in einer optisch ansprechenden Art und Weise an einem Gebäude anzubringen. Beispielsweise kann der Absorber auf einem Dach eines Gebäudes montiert werden, ohne dass das Aussehen des Gebäudes wesentlich beeinträchtigt wird. Die Befestigungsvorrichtung ermöglicht dabei gleichzeitig eine isolierte Montage auf dem Bauwerk. Vorzugsweise ist der Absorber mit der Befestigungsvorrichtung auf einer Höhe montiert, dass sich zwischen dem Unterblech und dem Untergrund ein Spalt ergibt, der groß genug ist mit den Einlass und/oder mit dem Auslass verbundene Zuleitungen aufzunehmen. Die Zuleitungsrohre sind dadurch von außen nicht einsehbar, so dass der optische Gesamteindruck nicht beeinträchtigt ist. Ferner sind die Zuleitungen beispielsweise vor Regenwasser geschützt.

Insbesondere ist es möglich in dem Unterblech und/oder in dem Oberblech einen Sichtbereich vorzusehen, der vorzugsweise im Wesentlichen transparent ausgeführt ist. Hierzu kann beispielsweise durch Stanzen eine Ausnehmung in dem Oberblech und/oder in dem Unterblech vorgesehen sein, wobei vorzugsweise sowohl das Oberblech als auch das Unterblech die Ausnehmung aufweisen und die Ausnehmungen im Wesentlichen übereinander angeordnet sind, um ein Fenster bereitzustellen, das eine Sicht durch den Absorber hindurch ermöglicht. Die Ausnehmungen können durch ein geeignetes Material, beispielsweise Acrylglas und/oder Quarzglas, geschlossen sein. Durch den Sichtbereich ist es möglich den Zustand des Absorbers im Innern zu kontrollieren. Ferner kann ein Sichtfenster ausgebildet werden, so dass der Absorber auch im Bereich eines Gebäudefensters angeordnet werden kann, ohne die Sicht aus dem Gebäude heraus signifikant zu beeinträchtigen. Es ist auch möglich in dem Sichtbereich ein Photovoltaikelement zur Erzeugung von elektrischer Energie aus Sonnenlicht, beispielsweise eine Solarzelle, vorzusehen. Dies ermöglicht es durch den Absorber sowohl Wärme als auch elektrische Energie bereitzustellen ohne hierbei CO₂ zu produzieren.

Besonders bevorzugt ist das Oberblech zumindest teilweise mit einer Absorptionsschicht zur Absorption von Sonnenstrahlung beschichtet. Bei der Absorptionsschicht kann es sich beispielsweise um einen speziellen Absorptionslack mit einem besonders hohem Absorptionsvermögen für Sonnenlicht oder auch um einen Lack in einer dunklen Farbe beispielsweise Schwarz handeln. Durch die verbesserte Absorption der Sonnenstrahlung kann die Erwärmung des durch den Absorber hindurch geleiteten Fluids verbessert werden, wodurch der Wirkungsgrad verbessert ist. Zusätzlich oder alternativ können das Oberblech, das Unterblech und/oder das Zwischenblech auf der Oberseite und/oder der Unterseite mit einer Beschichtung versehen sein, die insbesondere einen Korrosionsschutz bereitstellt. Dadurch wird die Lebensdauer des Absorbers gewährleistet, während gleichzeitig die Wartung vereinfacht wird, da insbesondere Revisionen im Wesentlichen nicht erforderlich sind. Insbesondere wenn die einzelnen Bleche durch Kleben oder formschlüssige Verbindungen, wie beispielsweise Klipsen miteinander verbunden werden, wird eine Beschädigung der Beschichtungen vermieden, so dass ein sicherer Korrosionsschutz und gleichzeitig eine sichere Verbindung der Blechbauteile gewährleistet werden.

Das Unterblech ist insbesondere in der Lage als tragendes Bauteil zumindest das Eigengewicht des Absorbers aufzunehmen ohne sich hierbei zu verbiegen. Hierzu weist das Unterblech eine Blechstärke von insbesondere ≥ 0,1 mm bis ≤2,5 mm, vorzugsweise ≥0,5 mm bis ≤2 mm, und besonders bevorzugt ≥ 0,7 mm bis ≤1,5 mm.

Das Oberblech des erfindungsgemäßen Absorbers kann eine besonders geringe Blechstärke aufweisen, wodurch das Gewicht des Absorbers reduziert wird und das Umformen des Oberblechs vereinfacht wird. Das Oberblech weist insbesondere eine Blechstärke von ≥ 0,05 mm bis ≤ 1,2 mm, vorzugsweise ≤1,0 mm bzw.≤ 0,4 mm und besonders bevorzugt ≤ 0,2 mm auf.

Die Erfindung betrifft ferner ein Solarthermiesegment, mit dem ein Fluid, beispielsweise Wasser oder eine Emulsion, mit Hilfe von Sonnenstrahlung erwärmt werden kann. Das Solarthermiesegment weist eine Befestigungsvorrichtung mit mehreren Befestigungsschienen beispielsweise vergleichbar zu einer Glasfassade auf. Die Befestigungsschienen der Befestigungsvorrichtung umgreifen einen Absorber zur Wärmegewinnung aus Solarthermie im Wesentlichen rahmenförmig. Der Absorber kann wie vorstehend beschrieben aus- und weitergebildet sein. Aufgrund der im Wesentlichen rahmenförmigen Befestigungsvorrichtung können mehrere jeweils einen Absorber aufweisende Solarthermiesegmente derart, vorzugsweise nebeneinander, angeordnet werden, dass sie eine größere Fläche ergeben, die zur Erwärmung des Fluids verwendet wird. Insbesondere können mehrere Solrathermiesegmente in Reihe geschaltet werden, um eine besonders große Temperaturerhöhung des durchzuleitenden Fluids zu erreichen. Ferner können mehrere Solarthermiesegmente bzw. Ansammlungen von in Reihe geschalteten Solarthermiesegmente parallel geschaltet werden, um den Massenstrom des erwärmten Fluids zu vergrößern.

Die Erfindung betrifft ferner eine Solarthermieanlage, bei der mit Hilfe von Sonnenstrahlung ein Fluid erwärmt wird. Diese Solarthermieanlage weist mehrere Solarthermiesegmente auf, die wie vorstehend beschrieben aus- und weitergebildet sein können. Bei der Solarthermieanlage sind die einzelnen Solarthermiesegemente zumindest in einem Teilbereich über dieselbe Befestigungsschiene miteinander verbunden. Das heißt die Befestigungsschiene einer Befestigungsvorrichtung eines ersten Solarthermiesegments ist gleichzeitig Teil einer Befestigungsvorrichtung eines zweiten Solarthermiesegments. Dadurch ist es möglich den Flächenbedarf zur Aufnahme der einzelnen Absorber zu reduzieren, so dass besonders viel Fläche für die Absorber und besonders wenig Fläche für die Befestigungsvorrichtung vorgesehen werden kann.

Die Erfindung betrifft ferner ein Gebäude das mehrere Solarthermiesegemente und/oder eine Solarthermieanlage aufweist, die jeweils wie vorstehend beschrieben aus- und weitergebildet sein können. Aufgrund der stabilen Bauweise bilden die mehreren Solarthermiesegmente und/oder die Solarthemieanlage zumindest teilweise ein Dach und/oder eine Wand des Gebäudes aus. Die Solarthermiesegemnete bzw. die Solarthermieanlage sind also nicht nur beispielsweise auf Dachziegel des Daches aufgesetzt, sondern ersetzen die ansonsten erforderliche Dachziegel-Eindeckung. Die Solarthermiesegmente bzw. die Solarthermieanlage können also direkt auf die Dachunterkonstruktion, die teilweise das Tragwerk für die Solarthermiesegmente sind, aufgesetzt werden und mit dieser verbunden sein.

Die Erfindung betrifft ferner ein Verfahren zur Herstellung eines Absorbers, der insbesondere wie vorstehend beschrieben aus- und weitergebildet sein kann. Bei dem Verfahren werden eine erste Platine und eine zweite Platine bereit gestellt, die insbesondere zuvor vorzugsweise durch Stanzen aus einem gemeinsamen Flachband, das insbesondere als Coil vorliegt, erhalten wurden. Die erste Platine wird zu einem Oberblech und/oder die zweite Platine zu einem Unterblech tiefgezogen, wobei während des Tiefziehens ein Einlass und/oder ein Auslass und/oder Leitmittel in dem Oberblech und/oder in dem Unterblech ausgebildet werden. Insbesondere werden vorzugsweise gleichzeitig ein dem Einlass zugeordnetes Einlaufbassin und ein dem Auslauf zugeordnetes Auslaufbassin durch Tiefziehen hergestellt. Gegebenenfalls werden der Einlass und/oder der Auslass und/oder sich ergebende Flanschfläche beschnitten. Das Oberblech wird mit dem Unterblech insbesondere durch Kleben und/oder Klipsen verbunden, um den Absorber auszubilden. Durch dieses Verfahren ist die Herstellung des Absorbers, der als Absorber für die Solarthemie verwendet werden kann, vereinfacht. Zur Herstellung sind lediglich Maschinen erforderlich, die beispielsweise mit dem hierfür erforderlich Know-How aus der Automobiltechnik, beispielsweise dem Karosseriebau, bekannt sind. Insbesondere ist es möglich das Oberblech und das Unterblech jeweils maximal ein einziges Mal einem Umformverfahren auszusetzen. Sämtliche Tiefziehvorgänge können in einem einzigen Schritt durchgeführt werden, wobei insbesondere weitere Umformschritte nicht erfolgen.

Nachfolgend wird die Erfindung unter Bezugnahme auf die anliegenden Zeichnungen anhand bevorzugter Ausführungsbeispiele näher erläutert. Es zeigen:

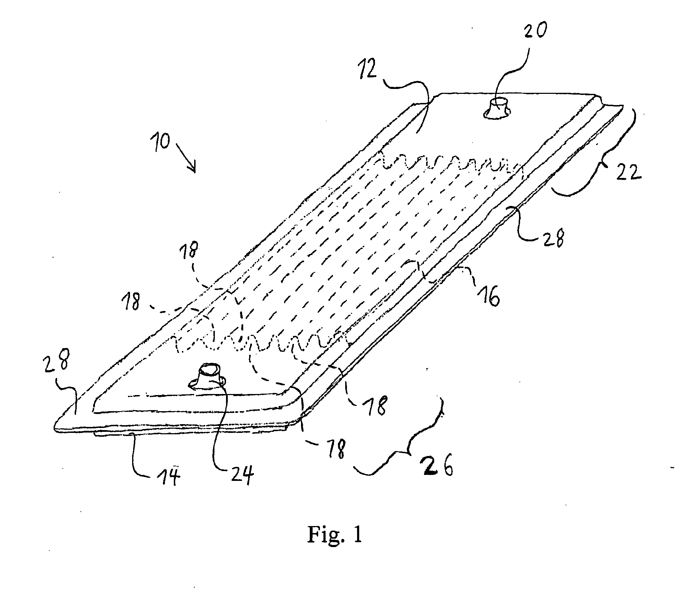

Fig. 1 eine schematische Perspektive Ansicht eines erfindungsgemäßen Absorbers,
Fig. 2 eine schematische Seitenansicht einer Verbindungsstelle des erfindungsgemäßen Absorbers,
Fig. 3 eine schematische Schnittansicht einer Solarthermieanlage, die erfindungsgemäße Absorber aufweist
Fig. 4 eine schematische perspektivische Ansicht eines Unterblechs für den erfindungsgemäßen Absorber und
Fig. 5 eine schematische Draufsicht des Unterblechs aus Fig. 4 mit Strömungslinien.

Der erfindungsgemäße Absorber 10 weist ein im Betriebszustand der Sonne zugewandtes Oberblech 12 und ein zur Sonne abgewandtes Unterblech 14 auf. Zwischen dem Oberblech 12 und dem Unterblech 14 ist im dargstellten Ausführungsbeispiel ein als Wellblech ausgestaltetes Zwischenblech 16 angeordnet. Durch das Zwischenblech 16 sind zwischen dem Oberblech 12 und dem Zwischenblech 16 einerseits und zwischen dem Unterblech 14 und dem Zwischenblech 16 anderseits jeweils als Leitmittel mehrere Kanäle 18 ausgebildet.

Das Zwischenblech 16 verläuft nicht vollständig über die gesamte Länge des Oberblech 12 bzw. des Unterblechs 14. Das Zwischenblech 16 ist etwas kürzer ausgestaltet, so dass sich Bereiche ausbilden, in denen keine Kanäle 18 ausgebildet sind. In dem einen Bereich ist ein Einlass 20 angeordnet, so dass sich ein Einströmbereich 22 ausbildet, in dem sich die Strömung des eingeleiteten Fluids vergleichsmäßigen kann. Entsprechend ist am gegenüberliegenden Ende des Absorbers 10 ein Auslass 24 vorgesehen, der in einem Ausströmbereich 26 angeordnet ist.

Im dargestellten Ausführungsbeispiel sind sowohl der Einlass 20 als auch der Auslass 24 durch das Oberblech 12 ausgebildet und weisen nach oben. Prinzipiell können der Einlass 20 und/oder der Auslass 24 auch durch das Unterblech 14 ausgebildet sein und nach unten weisen. Ferner ist es möglich, dass der Einlass 20 und der Auslass 24 seitlich angeordnet sind.

Der Einlass 20 und/oder der Auslass 24 sind vorzugsweise durch Tiefziehen hergestellt und sind als einfache Ausstülpungen ausgebildet. Gegebenfalls kann vor dem Tiefziehen eine Öffnung in das Oberblech bzw. das Unterblech gestanzt sein.

Im dargestellten Ausführungsbeispiel weist sowohl das Oberblech 12 als auch das Unterblech 14 einen vollständig umlaufenden Ansatz 28 auf, über die das Oberblech 12 mit dem Unterblech 14 beispielsweise durch Kleben, Löten oder Schweißen verbunden sind. Insbesondere ist es möglich bei dem Oberblech 12, dem Unterblech 14 und dem Zwischenblech 16 Kupfer oder kupferhaltige Materialien zu vermeiden und stattdessen Stahl oder ein kupferfreies Nichteisenmetall zu verwenden.

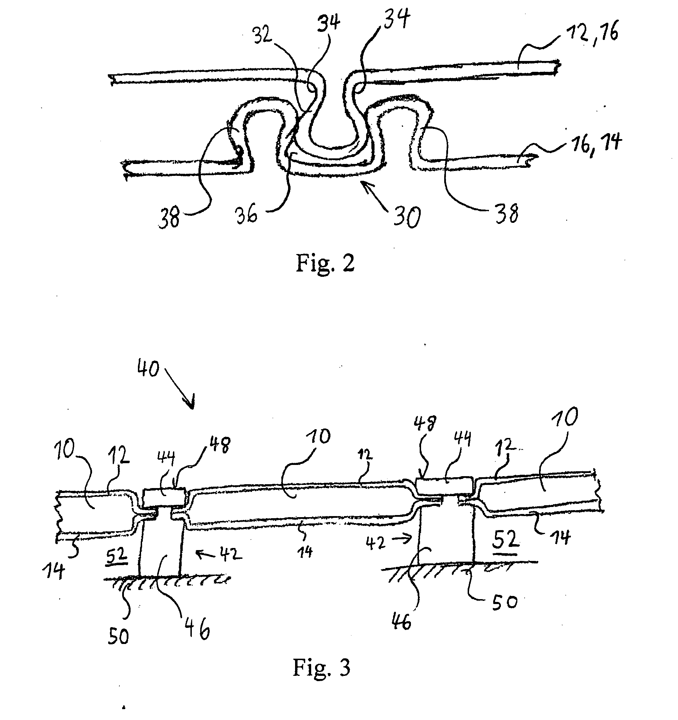

Die Verbindung des Oberblechs 12 mit dem Unterblech 14 beziehungsweise des Oberblechs 12 mit dem Zwischenblech 16 beziehungsweise des Zwischenblechs 16 mit dem Unterblech 14 kann durch eine formschlüssige Verbindung erfolgen (Fig. 2). Hierzu ist beispielsweise eine Klipsverbindung 30 vorgesehen. Die Klipsverbindung 30 kann das obere Blech 12, 16 eine insbesondere durch Tiefziehen hergestellte Rippe 32 aufweisen, die Hinterschneidungen 34 aufweist. Die hinterschnittene Rippe 32 greift in eine Vertiefung 36 des unteren Blechs 16, 14 ein. Die Vertiefung 36 verjüngt sich in einem der hinterschnittenen Rippe 32 zugewandten Öffnungsbereich, so dass die hinterschnittene Rippe 32 von der Vertiefung 36 sicher aufgenommen werden kann. Die Vertiefung 36 kann insbesondere durch entsprechend der hinterschnittenen Rippe 32 geformte Rippen 38 ausgebildet werden, die ebenfalls durch Tiefziehen hergestellt sein können. Durch die Verbindung 30 ergibt sich eine sichere Befestigung, die bei der Montage einfach herbei geführt werden kann.

Mehrere Absorber 10 können zu einer größeren Solarthermieanlage 40 zusammengeschaltet werden (Fig. 3). Die Solarthermieanlage 40 weist Befestigungsschienen 42 auf, die über eine Nut den Absorber 10 im Bereich der umlaufenden Ansätze 28 aufnehmen kann. Die Befestigungsschienen 42 weisen ein Kopfteil 44 auf, das mit einem Fußteil 46 verbunden werden kann. Das Kopfteil 44 kann ferner eine Kappe aufweisen, um die Verbindung vor Regenwasser zu schützen. Die Befestigungsschiene 42 weist im Bereich des Kopfteils 44 eine Oberseite 48 auf die mit dem Oberblech 12 fluchtet, um einen angenehmen optischen Gesamteindruck zu erzeugen. Die Haltenut der Befestigungsvorrichtung 40 weist bezogen auf einen Untergrund 50, bei dem es sich beispielsweise um die Unterkonstruktion eines Gebäudedachs handeln kann, eine Höhe auf, dass sich zwischen dem Unterblech 14 und dem Untergrund 50 ein Spalt 52 ausbildet. Der Spalt 52 weist eine Höhe auf, die ausreicht, um unterhalb der Absorber 10 Zuleitungsrohre verlegen zu können, die mit dem Einlass 20 und/oder dem Auslass 24 verbunden sein können.

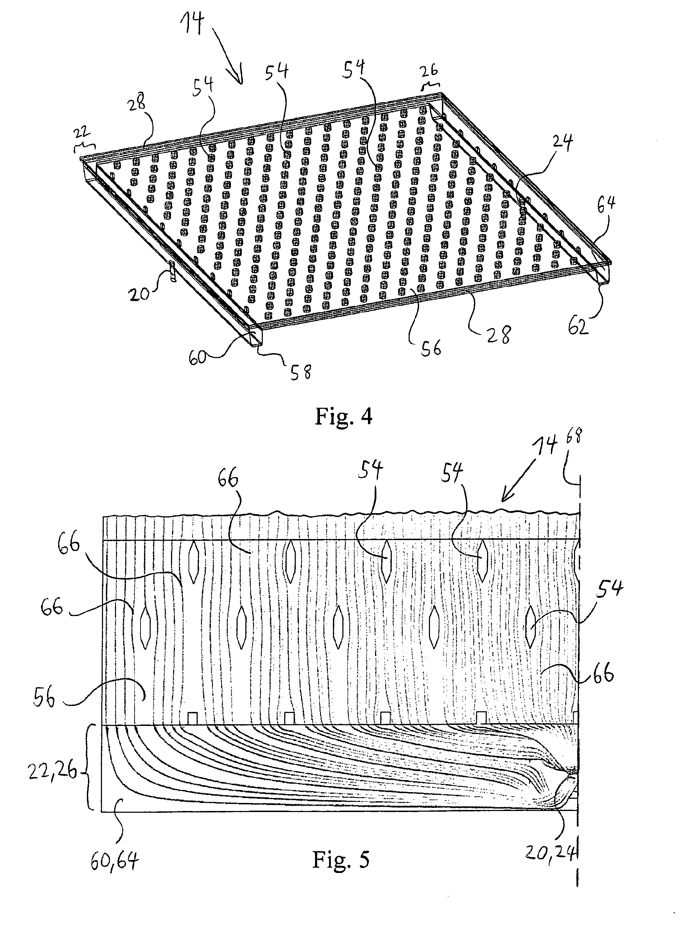

Das in Fig. 4 dargestellte Unterblech 14 weist eine Vielzahl Leitmittel auf, die als Strömungsleitbleche 54 ausgebildet sind, wodurch das Zwischenblech 16 eingespart werden kann. Die Strömungsleitbleche 54 sind durch Tiefziehen aus einem Leitungsboden 56 so stark heraus geformt, dass sich Ihre dem nicht dargestellten Oberblech 12 zugewandten Oberflächen auf einer Höhe zu den Flanschflächen des Ansatzes 28 befinden. Das Oberblech 12 kann dadurch als einfache Platte ausgeformt sein, die nicht einem Umformverfahren unterzogen werden muss. Im dargestellten Ausführungsbeispiel ist der Einlass 20 in einem Einlaufbassinboden 58 eines Einlaufbassin 60 ausgeformt. Durch die Breite des Einlaufbassins 60 in Strömungsrichtung wird der Einströmbereich 22 definiert. Entsprechend ist der Auslass 24 in einem Auslaufbassinboden 62 eines Auslaufbassin 64 ausgeformt, wobei durch die Breite des Auslaufbassin 64 in Strömungsrichtung der Ausströmbereich 26 definiert ist.

Zwischen dem Einströmbereich 22 und dem Ausströmbereich 26 ergeben sich mit Hilfe der Strömungsleitbleche 54 im Wesentlichen lineare, das heißt gerade Strömungslinien 66 (Fig. 5). Die Strömungslinien 66 weichen lediglich im Bereich des Einlaufbassin 60 und des Auslaufbassin 64 von der linearen Strömungsrichtung ab. Das Unterblech 14 ist insbesondere zu einer Symmetrieachse 68 symmetrisch gestaltet.

## Patentansprüche

1. Absorber zur Wärmegewinnung aus Solarthermie, mit
einem der Sonne zugewandten Oberblech (12),
einem der Sonne abgewandten Unterblech (14) und
zwischen dem Oberblech (12) und dem Unterblech (14) ausgebildeten Leitmitteln (18, 54) zur im Wesentlichen linearen und/oder homogenen Durchleitung eines Fluids von einem Einlass (20) zu einem Auslass (24),
wobei der Einlass (20) und/oder der Auslass (24) durch das Oberblech (12) und/oder das Unterblech (14) ausgebildet sind und
der Einlass (20) und/oder der Auslass (24) und/oder die Leitmittel (18, 54) durch Tiefziehen herstellbar sind.

2. Absorber nach Anspruch 1 **dadurch gekennzeichnet, dass** die Leitmittel (18, 54) durch das Oberblech (12) und/oder das Unterblech (14) insbesondere durch Tiefziehen ausgebildet sind.

3. Absorber nach Anspruch 1 oder 2 **dadurch gekennzeichnet, dass** die Leitmittel (18, 54) einstückig mit dem Oberblech (12) ausgebildet sind und das Unterblech (14) an den Leitmitteln (18, 54) anliegt und/oder die Leitmittel (18, 54) einstückig mit dem Unterblech (14) ausgebildet sind und das Oberblech (12) an den Leitmitteln (18, 54) anliegt.

4. Absorber nach einem der Ansprüche 1 bis 3 **dadurch gekennzeichnet, dass** mehrere in Strömungsrichtung und/oder quer zur Strömungsrichtung zueinander beabstandete Leitmittel (54) vorgesehen sind, die in Strömungsrichtung strömungstechnisch konturiert sind und insbesondere eine Länge in Strömungsrichtung aufweisen, die größer ist als eine Breite quer zur Strömungsrichtung.

5. Absorber nach einem der Ansprüche 1 bis 4 **dadurch gekennzeichnet, dass** das Unterblech (14) ein dem Einlass (20) zugeordnetes Einlaufbassin (60) zur Ausbildung eines Einströmbereichs (22), ein dem Auslass (24) zugeordnetes Auslaufbassin (64) zur Ausbildung eines Ausströmbereichs (26) und einen Leitungsboden (56), über den das Einlaufbassin (60) und das Auslaufbassin (64) miteinander verbunden sind, aufweist, wobei der Leitungsboden (56) einen geringeren Abstand zum Oberblech (12) aufweist als ein Einlaufbassinboden (58) des Einlaufbassins (60) und ein Auslaufbassinboden (62) des Auslaufbassins (64).

6. Absorber nach einem der Ansprüche 1 bis 5 **dadurch gekennzeichnet, dass** der Absorber nur durch das Oberblech (12) und das Unterblech (14) und gegebenenfalls einem Verbindungsmittel zur Verbindung des Oberblechs (12) mit dem Unterblech (14) ausgebildet ist.

7. Absorber nach einem der Ansprüche 1 bis 6 **dadurch gekennzeichnet, dass** der Einlass (20) und/oder der Auslass (24) als Ausstülpungen des Oberblechs (12) und/oder des Unterblechs (14) ausgebildet sind.

8. Absorber nach einem der Ansprüche 1 bis 7 **dadurch gekennzeichnet, dass** eine formschlüssige Verbindung zwischen Oberblech (12)/Unterblech (14) und/oder Oberblech (12)/Zwischenblech (16) und/oder Zwischenblech (16)Unterblech (14) vorgesehen ist, wobei die Verbindung insbesondere über eine hinterschnittene Rippe (32), die in einer sich im Öffnungsbereich verjüngenden Vertiefung (36) eingesetzt ist, erfolgt.

9. Absorber nach einem der Ansprüche 1 bis 8 **dadurch gekennzeichnet, dass** das Oberblech (12) und das Unterblech (14) jeweils einen vorzugsweise umlaufenden Ansatz (28) aufweisen und das Oberblech (12) und das Unterblech (14) über den Ansatz (28) insbesondere durch Kleben oder Laserschweißen miteinander verbunden ist.

10. Verfahren zur Herstellung eines Absorbers (10) zur Wärmegewinnung aus Solarthermie, insbesondere nach einem der Ansprüche 1 bis 9, mit den Schritten:
- Bereitstellen einer ersten Platine und einer zweiten Platine, die insbesondere durch Stanzen aus einem gemeinsamen Flachband erhalten wurden,
- Tiefziehen der ersten Platine zu einem Oberblech (12) und/oder der zweiten Platine zu einem Unterblech (14), wobei während des Tiefziehens ein Einlass (20) und/oder ein Auslass (24) und/oder Leitmittel (18, 54) in dem Oberblech (12) und/oder in dem Unterblech (14) ausgebildet werden, und
- Verbinden des Oberblechs (12) mit dem Unterblech (14) zur Ausbildung des Absorbers (10).
